# FASCICULE DE BREVET EUROPEEN

(11) **EP 0 408 431 B1**
(45) Date de publication et mention de la délivrance du brevet: **15.06.1994**
(21) Numéro de dépôt: 90401959.3
(22) Date de dépôt: 06.07.1990
(51) Int. Cl.: G05B 19/04

(54) **Procédé de mémorisation et de restitution d'un programme modifiable à exécuter par un processeur**
Verfahren zur Speicherung und Rückausgabe eines von einem Prozessor auszuführenden modifizierbaren Programmes
Method of memorisation and restitution of an alterable program to be executed by a processor

(30) Priorité: 11.07.1989 FR 8909300
(43) Date de publication de la demande: 16.01.1991
(73) Titulaire: CROUZET Electroménager, F-26000 Valence (FR)
(72) Inventeur: Blanc, Alain, F-26500 Bourg les Valence (FR); Dejoux, Didier, F-26400 Crest (FR); Fioretti,Jean, F-2600 Valence (FR); Girardin,Denis, F-26300 Alixan (FR)
(74) Mandataire: Bloch, Gérard

(56) Documents cités:
- EP-A- 0 163 775
- WO-A-89/00641
- GB-A- 2 028 539
- GB-A- 2 070 280

## Description

La présente invention a pour objet un procédé de mémorisation et de restitution d'un programme à exécuter par un processeur pour commander la mise en marche sélective et séquentielle d'une pluralité d'organes d'un appareil automatique.

L'invention s'applique notamment dans le domaine des appareils électroménagers, pour les machines à laver le linge ou la vaisselle. Ces appareils sont munis d'un programmateur qui commande le déroulement du programme de lavage à effectuer par l'appareil, programme par ailleurs choisi par l'utilisateur parmi une pluralité de programmes disponibles.

Aujourd'hui, les programmateurs, qui ne comportaient auparavant que des contacts actionnés par les cames d'un bloc de cames entraîné à vitesse constante, deviennent de plus en plus complexes. Ainsi, ils comportent souvent, en plus de ces contacts commandés mécaniquement, ou à leur place, des relais commandés électroniquement. De plus, même dans le cas où ils conservent un bloc de cames, celui-ci peut être entraîné à vitesse variable, ou encore dans un sens ou dans l'autre. Il en résulte que de tels programmateurs sont en général commandés par un microprocesseur, qui exécute un programme stocké dans une mémoire.

Il se pose donc au fabricant de programmateurs le problème du choix du type de mémoire dans laquelle sera stocké la programme. La solution la plus économique consiste à choisir une mémoire morte, par exemple une mémoire ROM dite "masquée", du fait qu'elle est obtenue par masquage à la demande d'un circuit prédiffusé. Cependant, dans ce cas, le programme mémorisé n'est plus modifiable. Or il est souvent nécessaire de modifier le programme mémorisé, parce que l'on s'aperçoit après coup qu'une rectification est nécessaire, ou parce que l'on veut répondre aux désirs changeants du fabricant d'appareils électroménagers utilisant le programmateur. Si l'on désire pouvoir modifier le programme, il est nécessaire de choisir une mémoire reprogrammable, mais, compte-tenu de la taille du programme et du coût des mémoires reprogrammables de grande capacité, un tel choix est prohibitif, surtout dans le cas d'appareils de grande diffusion dont le prix de revient est critique.

La présente invention vise à pallier les inconvénients précédents en procurant un procédé de mémorisation et de restitution d'un programme modifiable dans une mémoire qui reste d'un prix de revient raisonnable.

A cet effet, elle a pour objet un procédé du type défini ci-dessus, caractérisé par le fait que:
- on décompose le programme non-modifié en un ensemble de parties hiérarchisées, chaque partie étant associée à une tâche à exécuter par le processeur,
- on mémorise, dans une mémoire morte, d'une part le code exécutable de chacune des différentes dernières parties dans la hiérarchie, et d'autre part la composition de chacune des autres parties,
- on mémorise, dans une mémoire reprogrammable, les adresses de mémorisation de la mémoire morte dont le contenu est à modifier en réponse à une modification du programme, ainsi que les modifications correspondantes, et,
- on restitue le programme modifié mémorisé en lisant successivement les contenus des adresses de mémorisation de la mémoire morte et en recherchant dans la mémoire reprogrammable, pour chaque adresse de mémorisation, une éventuelle modification de son contenu afin d'en tenir compte.

Avec le procédé de l'invention, il est possible de modifier des parties très importantes du programme tout en utilisant une mémoire reprogrammable de taille réduite. En effet, la demanderesse a remarqué que, dans la plupart des cas, les modifications à effectuer n'obligent pas à écrire de nouvelles parties du programme, mais à supprimer certaines parties existantes, ou encore à en intervertir d'autres. Avec le procédé de l'invention, ceci se fait en intervenant uniquement sur les données mémorisées dans la mémoire morte qui indiquent par exemple, pour chaque partie d'un niveau hiérarchique donné, l'endroit de la mémoire où est mémorisée la suite des parties, de niveau hiérarchique immédiatement inférieur à ce niveau donné, qui composent cette partie. Donc, du fait de la décomposition hiérarchisée du programme non-modifié, une modification du programme se traduit en général par la modification du contenu de quelques adresses de mémorisation seulement, et les données relatives à ces modifications nécessitent peu de place dans la mémoire reprogrammable.

Il en résulte que celle-ci peut être de taille modeste, et donc de coût réduit. Ceci permet notamment, tout en gardant un prix de revient raisonnable, de bénéficier des avantages d'une mémoire du type EEPROM, qui est effaçable électriquement et non-volatile. De même, ceci permet de faire réaliser en un très grand nombre d'exemplaires la mémoire masquée, puisque, grâce au procédé de l'invention, il devient possible de continuer à écouler ces exemplaires après modification du programme. De plus, le procédé de l'invention permet de mettre en circulation très rapidement un programmateur pourvu d'un programme modifié, sans avoir à attendre la réalisation de nouvelles mémoires masquées.

Dans la mise en oeuvre préférée du procédé de l'invention:
- on décompose le programme non-modifié en une suite de premières parties, chacune de ces premières parties en une suite de deuxièmes parties, chacune de ces deuxièmes parties en une suite de troisièmes parties, et ainsi de suite jusqu'à obtenir des suites de dernières parties,
- on mémorise, dans la mémoire morte:
   - le code exécutable de chacune des différentes dernières parties à une adresse de mémorisation affectée à cette dernière partie,
   - pour chacune des différentes avant-dernières parties, d'une part la liste des adresses de memorisation affectées aux dernières parties de la suite en laquelle on a décomposé cette avant-dernière partie, et d'autre part l'adresse initiale de mémorisation de cette liste, à une adresse de mémorisation affectée à cette avant-dernière partie,
   - et ainsi de suite jusqu'à, pour chacune des différentes premières parties, d'une part la liste des adresses de mémorisation affectées aux deuxièmes parties de la suite en laquelle on a décomposé cette première partie, et d'autre part l'adresse initiale de mémorisation de cette liste, à une adresse de mémorisation affectée à cette première partie, et,
   - la liste des adresses de mémorisation affectées aux premières parties de la suite en laquelle on a décomposé le programme.

Avantageusement, on mémorise les modifications dans la mémoire reprogrammable dans l'ordre des adresses croissantes de la mémoire morte, et, avant toute lecture du contenu d'une adresse de mémorisation de la mémoire morte, pour rechercher si le contenu de cette adresse a été modifié, on balaye la mémoire reprogrammable jusqu'à ce qu'on rencontre soit cette adresse de mémorisation, soit une adresse à modifier de rang supérieur.

Cette caractéristique permet d'avoir une taille de la mémoire reprogrammable particulièrement réduite.

Avantageusement encore, en réponse à une modification du programme impliquant l'exécution d'une tâche qui n'a pas été mémorisée dans la mémoire morte, on mémorise dans la mémoire reprogrammable soit le code exécutable de cette nouvelle tâche, soit sa composition si elle est décomposable en parties déjà mémorisées dans la mémoire morte.

Les possibilités de modification du programme sont alors très grandes, et, une telle situation étant accidentelle, il ne résulte pas de cette caractéristique, en général, une augmentation trop importante de la taille de la mémoire reprogrammable.

La présente invention sera mieux comprise à la lecture de la description suivante de la mise en oeuvre préférée du procédé de l'invention, faite en se référant aux dessins annexés, sur lesquels:
- la figure 1 représente un schéma par blocs d'un programmateur pour machine à laver le linge,
- la figure 2 représente, de façon schématique, l'organisation interne d'une mémoire ROM masquée utilisée dans le programmateur de la figure 1,
- la figure 3 représente, de façon schématique, l'organisation interne d'une mémoire EEPROM utilisée dans le programmateur de la figure 1.

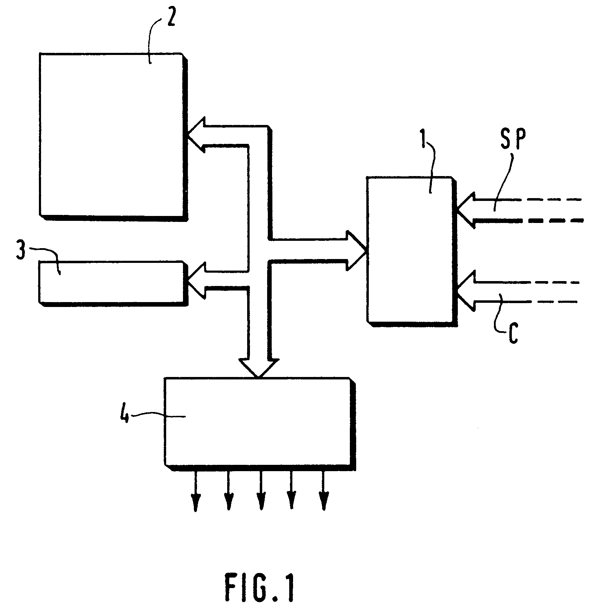

En se référant à la figure 1, un programmateur pour machine à laver le linge comprend ici un microprocesseur 1 relié par un bus à une mémoire ROM masquée 2, à une mémoire EEPROM 3 et à un circuit d'alimentation 4 des divers organes de puissance de la machine à laver.

Ces organes de puissance de la machine à laver, non représentés dans un souci de simplicité, comprennent par exemple un moteur d'entraînement du tambour, une résistance de chauffage de l'eau de la cuve, une pompe de vidange, et ainsi de suite.

La machine à laver est également pourvue d'une part d'un dispositif de sélection, par l'utilisateur de la machine, du programme de lavage, dispositif non représenté, et d'autre part d'un certain nombre de capteurs, également non-représentés, par exemple pour mesurer la quantité d'eau, sa température, et ainsi de suite.

Le dispositif de sélection délivre au microprocesseur 1 un signal SP de sélection de programme. Les capteurs délivrent au microprocesseur 1 un ensemble de signaux notés C. Ici les signaux SP et C sont supposés, dans un souci de simplicité, délivrés sous une forme numérique directement exploitable par le microprocesseur 1.

Le circuit d'alimentation 4 comprend soit un ensemble de relais commandés par le microprocesseur 1, chaque relais permettant l'alimentation en énergie électrique d'un organe de puissance et donc sa mise en marche, soit un ensemble de contacts ayant la même fonction, et actionnés mécaniquement par un bloc de cames entraîné par un moteur commandé par le microprocesseur 1, soit encore les deux.

Le programmateur qui vient d'être décrit fonctionne comme suit. En réponse au signal SP de sélection de programme, le microprocesseur 1 lit dans les mémoires 2 et 3 une suite d'instructions correspondant au programme sélectionne. Il exécute ces instructions qui correspondent principalement à la commande de la mise en marche séquentielle et sélective, par l'intermédiaire du circuit 4, des organes de puissance, en tenant compte, le cas échéant des informations délivrées par les capteurs, de façon par exemple à arrêter le chauffage de l'eau lorsque celle-ci a atteint une température déterminée, ou à tenir compte d'une éventuelle surcharge en linge, et ainsi de suite.

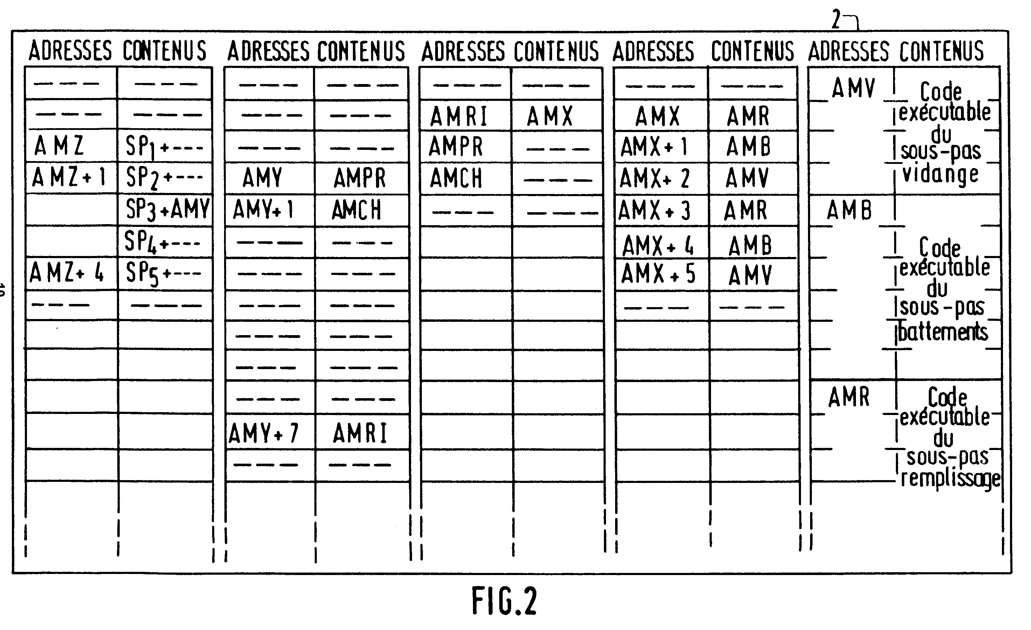

Pour permettre les modifications du programme mémorisé dans les mémoires 2 et 3 tout en utilisant une mémoire reprogrammable EEPROM 3 de taille relativement réduite, un procédé de mémorisation du programme et de restitution du programme mémorisé est maintenant décrit, en référence notamment à la figure 2.

On commence tout d'abord par décomposer le programme non-modifié, c'est à dire le programme dans son état d'origine, en une suite de pas, et chacun des pas en une suite de sous-pas. Chaque pas ou sous-pas est associé à une tâche particulière à effectuer par le microprocesseur. Par exemple un pas correspond au rinçage, et si ce rinçage doit comporter deux renouvellements d'eau ,le pas comprend six sous-pas qui sont successivement: remplissage, battements, vidange, remplissage, battements, et vidange.

Plus généralement, on décompose le programme non-modifié en un ensemble de parties hiérarchisées, chaque partie étant associée à une tâche à exécuter par le microprocesseur. Ainsi, on décompose le programme d'origine en une suite de premières parties, chacune des premières parties en une suite de deuxièmes parties, chacune des deuxièmes parties en une suite de troisièmes parties, et ainsi de suite jusqu'à des dernières parties.

Ici, les premières parties sont les pas et les deuxièmes parties sont les sous-pas, et, dans un souci de simplicité, ces deuxièmes parties sont également les dernières dans la hiérarchie.

Après avoir ainsi décomposé le programme non-modifié, on mémorise, dans la mémoire ROM 2, le code exécutable de chacun des différents sous-pas à une adresse de mémorisation que l'on affecte à ce sous-pas. Par exemple, si le code exécutable du sous-pas relatif à la vidange nécessite quatre cases-mémoires, on mémorise ce code dans un groupe de quatre cases-mémoires, et on affecte l'adresse AMV de ce groupe au sous-pas relatif à la vidange. L'adresse AMV du groupe de quatre cases est ici l'adresse de la première de ces quatre cases, le microprocesseur 1 étant agencé, de façon connue, pour lire en bloc le contenu des quatre cases à partir de l'adresse de la première des cases. Naturellement, on ne mémorise ainsi que les codes exécutables des sous-pas différents, c'est à dire que lorsqu'un même sous-pas, comme celui relatif à la vidange par exemple, apparait plusieurs fois dans la décomposition du programme, son code exécutable n'est mémorisé qu'une seule fois et il ne lui est affecté qu'une seule adresse de memorisation.

A titre d'exemple, on a également fait figurer sur la figure 2 un groupe de six cases d'adresse AMB affectée au sous-pas de battements, qui contient le code exécutable relatif à la commande de battements du tambour de la machine par le microprocesseur 1, ainsi qu'un groupe de trois cases d'adresse AMR affectée au sous-pas de remplissage, qui contient le code exécutable relatif à la commande de remplissage de la cuve par le microprocesseur 1.

On mémorise également, pour chacun des différents pas, la composition de ce pas, c'est à dire la liste des adresses de mémorisation affectées aux sous-pas de la suite en laquelle on a décomposé ce pas. Ici, et à titre d'exemple, pour le pas de rinçage dont il a déjà été question, on mémorise la liste suivante d'adresses de mémorisation:
AMR, AMB, AMV, AMR, AMB et AMV

Pour mémoriser cette liste, on utilise une suite de cases mémoire dont les adresses se suivent, par exemple:
AMX., AMX+1, AMX+2, ...et AMX+5
et on place l'adresse AMR comme contenu dans la case d'adresse AMX, l'adresse AMB comme contenu dans la case d'adresse AMX+1, l'adresse AMV comme contenu dans la case AMV+2, et ainsi de suite. On affecte alors au pas considéré, ici le pas de rinçage, une case mémoire d'adresse de mémorisation AMRI dans laquelle on mémorise l'adresse initiale de mémorisation de la liste, ici l'adresse AMX.

Naturellement, et comme précédemment pour les sous-pas, on ne mémorise ainsi que les compositions des pas différents, c'est à dire que lorsqu'un même pas apparait plusieurs fois dans la décomposition du programme, sa composition n'est mémorisée qu'une seule fois et il ne lui est affecté qu'une seule adresse de mémorisation comme AMRI, si on considère le cas du pas de rinçage, par exemple.

A titre d'exemple, on a également fait figurer sur la figure 2 une case d'adresse AMPR affectée au pas de prélavage, qui détermine la composition de ce pas, ainsi qu'une case d'adresse AMCH affectée au sous-pas de chauffage, qui détermine la composition de ce pas.

On mémorise alors la liste des adresses de mémorisation affectées aux pas de la suite en laquelle on a décomposé le programme. A titre d'exemple, pour un programme qui commencerait par un pas de prélavage,se poursuivrait par un pas de chauffage, et après divers autres pas se terminerait par un pas de rinçage, on mémoriserait la liste suivante:
AMPR, AMCH, ...et AMRI

Pour cette mémorisation, on utilise comme précédemment une suite de cases dont les adresses se suivent, par exemple:
AMY, AMY+1, ...et AMY +7
si le programme comprend huit pas.

Ici, et comme il est prévu plusieurs programmes de lavage parmi lesquels l'utilisateur peut choisir, on mémorise l'adresse initiale de mémorisation de la liste de pas du programme, ici l'adresse AMY, dans une case affectée au programme. On mémorise également, dans cette case affectée au programme, la valeur prise par le signal SP lorsque l'utilisateur choisit ce programme. Par exemple, si l'utilisateur a le choix entre cinq programmes, le signal SP est susceptible de prendre cinq valeurs:
SP₁, SP₂, ...et SP₅

Si le programme que l'on a considéré jusqu'à présent est le troisième programme, on mémorise la valeur SP₃ avec l'adresse AMY dans la case affectée à ce troisième programme. Il est alors commode d'affecter à la suite des cinq programmes cinq cases dont les adresses se suivent, par exemple:
AMZ, AMZ+1, ...et AMZ+4

Naturellement, et comme cela a déjà été signalé, l'exemple actuellement décrit de décomposition du programme en un ensemble de parties hiérarchisées est relativement simple, puisque chaque programme est décomposé en une suite de pas et chaque pas en une suite de sous-pas. Toutefois, il est à la portée de l'homme du métier de transposer le procédé exposé au cas où la décomposition hiérarchisée comprend un grand nombre de niveau hiérarchiques différents.

Lorsque des modifications doivent être apportées au programme qui a été mémorisé, dans la mémoire ROM 2 masquée, comme cela vient d'être exposé, on mémorise ces modifications dans la mémoire EEPROM 3 comme cela va maintenant être exposé

On suppose que l'on veut effectuer les modifications suivantes:
- suppression du pas de chauffage dans le troisième programme, et
- doublement du temps des premiers battements dans le pas de rinçage

Il suffit donc de mémoriser dans la mémoire EEPROM 3 d'une part le fait que le contenu de l'adresse de mémorisation AMY+1 ne doit pas être exécuté et d'autre part le fait qu'il faut insérer un sous-pas supplémentaire de battements avant celui qui est désigné par le contenu mémorisé à l'adresse AMX+1.

Pour ce faire, et pour de raisons qui seront mieux comprises dans la suite, on détermine parmi les adresses AMY+1 et AMX+1, celle qui a le rang le plus faible. On supposera ici qu'il s'agit de l'adresse AMY+1.

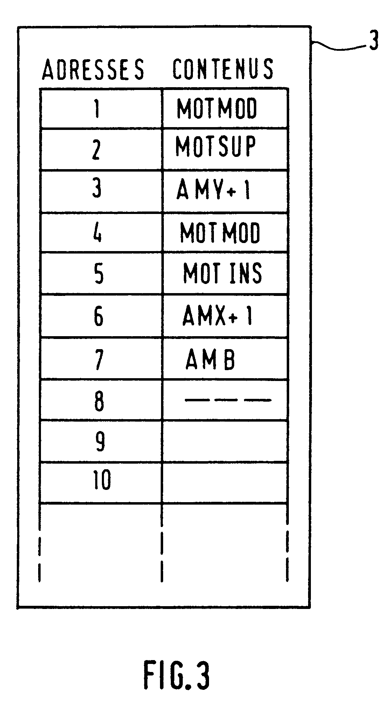

On mémorise alors la modification relative au contenu à cette adresse AMY +1. Pour cela, et en se référant à la figure 3, on mémorise dans la première case de la mémoire 3 un mot codé MOTMOD, toujours le même, qui sera interprété par le microprocesseur 1 comme représentatif d'un début de modification. Ensuite on mémorise, dans la deuxième case de la mémoire 3, un mot codé MOTSUP lié au type de modification à effectuer. Ici le mot codé mémorisé correspond à la non-exécution du contenu de la case à modifier. Enfin, dans la troisième case de la mémoire 3, on mémorise l'adresse de mémorisation, c'est à dire l'adresse de la case, dont le contenu est à modifier. Ici cette adresse est AMY+1. On passe ensuite la modification relative au contenu à l'adresse AMX+1. Pour cela on mémorise dans la quatrième case le mot codé MOTMOD pour indiquer le début d'une nouvelle modification, puis dans la cinquième case un mot codé MOTINS qui correspond à l'insertion d'un contenu supplémentaire avant le contenu de la case à modifier. Dans la sixième case, on mémorise l'adresse de mémorisation à modifier, ici l'adresse AMX+1, et dans la septième case le contenu à insérer, ici l'adresse AMB, de façon à ce que deux sous-pas successifs de battements se trouvent effectués.

Il est également possible, en procédant de façon analogue, de remplacer le contenu d'une adresse de mémorisation par le contenu d'une autre adresse de mémorisation en mémorisant, après le mot MOTMOD, un mot codé MOTREM, puis l'adresse dont le contenu est à modifier, et enfin le contenu de remplacement.

De même, s'il apparait qu'il faut faire exécuter au microprocesseur 1 une tâche qui n'a pas été mémorisée dans la mémoire ROM 2, il est possible de mémoriser soit le code exécutable de cette nouvelle tâche, soit sa composition si elle est décomposable en parties déjà mémorisée. En pratique, cette situation reste accidentelle, si bien que la taille de la mémoire EEPROM 3 peut rester réduite.

La restitution du programme modifié mémorisé comme cela vient d'être décrit se fait par lectures successives des contenus des adresses de mémorisation de la mémoire ROM 2, en recherchant dans la mémoire EEPROM 3, pour chaque adresse de mémorisation, une éventuelle modification afin d'en tenir compte. C'est la raison pour laquelle, comme on l'a fait remarquer, les modifications sont mémorisées dans la mémoire EEPROM 3 dans l'ordre des adresses croissantes de la mémoire ROM 2. Ainsi, avant toute lecture du contenu d'une adresse de mémorisation de la mémoire ROM 2, le microprocesseur 1 , pour rechercher si le contenu de cette adresse a été modifié, balaye la mémoire reprogrammable 3 jusqu'à ce qu'il rencontre soit cette adresse de mémorisation, soit une adresse à modifier de rang supérieur. Dès qu'il rencontre une adresse à modifier de rang supérieur à celle qu'il recherche, il en déduit que l'adresse qu'il recherche n'a pas été modifiée. Cette manière de procéder, si elle n'est pas très rapide, permet un agencement très compact de la mémoire EEPROM 3. Or, dans l'application considérée, il n'est pas nécessaire que la restitution se fasse à grande vitesse.

Le microprocesseur 1, lorsqu'il reçoit le signal SP₃ commence tout d'abord par balayer systématiquement la suite d'adresses AMZ à AMZ+4 de la mémoire ROM 2 en comparant les valeurs du signal SP qui y sont contenues à la valeur SP₃. Il détermine ainsi l'adresse de mémorisation affectée au programme choisi, soit ici AMY . Il se rend à cette adresse AMY, qui est l'adresse initiale de la liste des pas qui composent le troisième programme choisi,.pour lire le contenu qui s'y trouve mémorisé, soit AMPR. AMPR est l'adresse affectée au pas de prélavage. Le microprocesseur 1 se rend à cette adresse pour lire le contenu qui s'y trouve mémorisé, qui est l'adresse initiale de la liste des sous-pas qui composent le pas de prélavage. Le microprocesseur 1 balaye alors cette liste de sous-pas et en lit à chaque fois le code exécutable qu'il exécute afin que s'accomplisse le pas de prélavage. Naturellement, à chaque fois qu'il passe par une adresse de mémorisation de la mémoire ROM 2, le microprocesseur 1 recherche dans la mémoire EEPROM 3 une éventuelle modification. Dans l'exemple décrit ici, aucune des adresses de mémorisation de la mémoire ROM 2 rencontrées jusqu'à cette étape du programme n'avait son contenu à modifier.

Lorsque le pas de prélavage est terminé, le microprocesseur 1 se rend à l'adresse AMY+1 qui suit l'adresse initiale AMY de la liste de pas composant le troisième programme. Comme cette adresse figure dans la mémoire EEPROM 3 ,le microprocesseur 1 tient compte de la modification du contenu de cette case AMY+1, modification qui consiste à supprimer le pas correspondant, qui est ici le pas de chauffage.

Le microprocesseur 1 ne tient donc pas compte du contenu mémorisé à l'adresse AMY+1 et se rend à l'adresse AMY+2, et ainsi de suite. Naturellement, dans l'exemple décrit, lorsque le microprocesseur 1 va passer par l'adresse AMX+1 de la mémoire ROM 2, il tiendra compte de la modification pour insérer un sous-pas supplémentaire de battements au premier sous-pas de battements du pas de rinçage.

Naturellement, la portée de la présente demande n'est pas limitée à la description qui vient d'être faite d'un programmateur pour machine à laver le linge. C'est ainsi qu'il est à la portée de l'homme du métier d'adapter le le procédé de l'invention à tout programme exécutable par un processeur pour commander la mise en marche sélective et séquentielle d'une pluralité d'organes d'un appareil automatique.

De même, dans un souci de simplicité, on a considéré dans la description que les adresses d'une suite de cases mémoires utilisée pour mémoriser une liste de pas ou de sous-pas étaient consécutives. Il n'en est pas nécessairement ainsi en pratique, où compte-tenu de la taille des cases mémoires disponibles et de la quantité d'informations à mémoriser, on peut notamment utiliser plusieurs cases pour mémoriser une seule information. Les adaptations du procédé qui en résultent sont évidemment à la portée de l'homme du métier.

## Revendications

1. Procédé de mémorisation et de restitution d'un programme modifiable à exécuter par un processeur (1) pour commander la mise en marche sélective et séquentielle d'une pluralité d'organes d'un appareil automatique, programme caractérisé par le fait que:
- on décompose le programme non-modifié en un ensemble de parties hiérarchisées, chaque partie étant associée à une tâche à exécuter par le processeur (1),
- on mémorise, dans une mémoire morte (2), d'une part le code exécutable de chacune des différentes dernières parties dans la hiérarchie, et d'autre part la composition (AMX, AMR-AMB-AMV-AMR-AMB-AMV, AMY, AMPR-AMCH-...-AMRI) de chacune des autres parties,
- on mémorise, dans une mémoire reprogrammable (3), les adresses de mémorisation (AMY+1, AMX+1) de la mémoire morte (2) dont le contenu est à modifier en réponse à une modification du programme, ainsi que les modifications (MOTSUP, MOTINS, AMB) correspondantes, et,
- on restitue le programme modifié mémorisé en lisant successivement les contenus des adresses de mémorisation de la mémoire morte (2) et en recherchant dans la mémoire reprogrammable (3), pour chaque adresse de mémorisation, une éventuelle modification de son contenu afin d'en tenir compte.

2. Procédé selon la revendication 1, dans lequel:
- on décompose le programme non-modifié en une suite de premières parties, chacune de ces premières parties en une suite de deuxièmes parties, chacune de ces deuxièmes parties en une suite de troisièmes parties, et ainsi de suite jusqu'à obtenir des suites de dernières parties, et,
- on mémorise, dans la mémoire morte (2):
- le code exécutable de chacune des différentes dernières parties à une adresse de mémorisation (AMV, AMB, AMR) affectée à cette dernière partie,
- pour chacune des différentes avant-dernières parties, d'une part la liste (AMR-AMB-AMV-AMR-AMB-AMV) des adresses de mémorisation affectées aux dernières parties de la suite en laquelle on a décomposé cette avant-dernière partie, et d'autre part l'adresse initiale de mémorisation (AMX) de cette liste, à une adresse de mémorisation (AMRI) affectée à cette avant-dernière partie,
- et ainsi de suite jusqu'à, pour chacune des différentes premières parties, d'une part la liste (AMR-AMB-AMV-AMR-AMB-AMV) des adresses de mémorisation affectées aux deuxièmes parties de la suite en laquelle on a décomposé cette première partie, et d'autre part l'adresse initiale de mémorisation (AMX) de cette liste, à une adresse de mémorisation (AMRI) affectée à cette première partie, et,
- la liste (AMPR-AMCH-...-AMRI) des adresses de mémorisation affectées aux premières parties de la suite en laquelle on a décomposé le programme.

3. Procédé selon l'une des revendications 1 ou 2, dans lequel on mémorise les modifications dans la mémoire reprogrammable (3) dans l'ordre des adresses croissantes de la mémoire morte (2), et, avant toute lecture du contenu d'une adresse de mémorisation de la mémoire morte (2), pour rechercher si le contenu de cette adresse a été modifié, on balaye la mémoire reprogrammable (3) jusqu'à ce qu'on rencontre soit cette adresse de mémorisation, soit une adresse à modifier de rang supérieur.

4. Procédé selon l'une des revendications 1 à 3, dans lequel, en réponse à une modification du programme impliquant l'exécution d'une tâche qui n'a pas été mémorisée dans la mémoire morte (2), on mémorise dans la mémoire reprogrammable (3) soit le code exécutable de cette nouvelle tâche, soit sa composition si elle est décomposable en parties déjà mémorisées dans la mémoire morte (2).

## Patentansprüche

1. Verfahren zur Speicherung und Rückausgabe eines von einem Prozessor (1) auszuführenden modifizierbaren Programms, um die selektive und sequenzielle Inbetriebnahme einer Mehrzahl von Organen einer automatischen Vorrichtung zu steuern, ein Verfahren, dadurch gekennzeichnet, daß:
- man das nicht modifizierte Programm in einen Satz hierarchisch angeordneter Teile zerlegt, wobei jeder Teil mit einer von dem Prozessor (1) auszuführenden Aufgabe assoziiert ist,
- man in einem Festspeicher (2) einerseits den auszuführenden Code von jedem der verschiedenen letzten Teile in der Hierarchie und andererseits die Zusammensetzung (AMX, AMR-AMB-AMV-AMR-AMB-AMV, AMY, AMPR-AMCH-...-AMRI) jedes der anderen Teile speichert,
- man in einem wiederprogrammierbaren Speicher (3) die Speicheradressen (AMY+1, AMX+1) des Festspeichers (2), dessen Inhalt in Antwort auf eine Modifikation des Programms zu modifizieren ist, sowie die entsprechenden Modifikationen (MOTSUP, MOTINS, AMB) speichert, und
- man das gespeicherte modifizierte Programm wieder ausgibt, indem man nacheinander die Inhalte der Speicheradressen des Festspeichers (2) liest und in dem wiederprogrammierbaren Speicher (3) für jede Speicheradresse eine eventuelle Modifikation ihres Inhalts sucht, um diese zu berücksichtigen.

2. Verfahren nach Anspruch 1, bei dem:
- man das nicht modifizierte Programm in eine Folge erster Teile, jeden dieser ersten Teile in eine Folge zweiter Teile, jeden dieser zweiten Teile in eine Folge dritter Teile u.s.w. bis zum Erhalt von Folgen letzter Teile zerlegt, und
- man in dem Festspeicher (2):
- den auszuführenden Code von jedem der verschiedenen letzten Teile bei einer Speicheradresse (AMV, AMB, AMR), die diesem letzten Teil zugeordnet ist, speichert,
- man für jeden der verschiedenen vorletzten Teile einerseits die Liste (AMR-AMB-AMV-AMR-AMB-AMV) der Speicheradressen, die den letzten Teilen der Folge zugeordnet sind, in welche diese vorletzten Teile zerlegt worden sind, und andererseits die Anfangsspeicheradresse (AMX) dieser Liste bei einer Speicheradresse (AMRI), welche diesem vorletzten Teil zugeordnet ist, speichert,
- und so fort, bis man für jeden der verschiedenen ersten Teile einerseits die Liste (AMR-AMB-AMV-AMR-AMB-AMV) der Speicheradressen, die den zweiten Teilen der Folge zugeordnet sind, in welche diese ersten Teile zerlegt worden sind, und andererseits die Anfangsspeicheradresse (AMX) dieser Liste bei einer Speicheradresse (AMRI), welche diesem ersten Teil zugeordnet ist, speichert und
- man die Liste (AMPR-AMCH-...-AMRI) der Speicheradressen, die den ersten Teilen der Folge zugeordnet sind, in welche das Programm zerlegt worden ist, speichert.

3. Verfahren nach einem der Ansprüche 1 oder 2, bei dem man die Modifikationen in dem wiederprogrammierbaren Speicher (3) in der Reihenfolge der steigenden Adressen des Festspeichers (2) speichert und man vor jeglichem Lesen des Inhalts einer Speicheradresse des Festspeichers (2), um zu untersuchen, ob der Inhalt dieser Adresse verändert worden ist, den wiederprogrammierbaren Speicher (3) abfragt, bis man entweder auf diese Speicheradresse oder auf eine zu modifizierende Adresse von höherem Rang trifft.

4. Verfahren nach einem der Ansprüche 1 bis 3, bei dem man in Antwort auf eine Modifikation des Programms, welche die Ausführung einer Aufgabe impliziert, die nicht in dem Festspeicher (2) gespeichert worden ist, in dem wiederprogrammierbaren Speicher (3) entweder den auszuführenden Code dieser neuen Aufgabe oder ihre Zusammensetzung speichert, wenn sie in Teile zerlegbar ist, die bereits in dem Festspeicher (2) gespeichert sind.

## Claims

1. Method of memorisation and restitution of an alterable program to be executed by a processor (1) for controlling the selective and sequential starting-up of a plurality of elements of an automatic apparatus, program characterised by the fact that:
- the non-altered program is decomposed into all set of parts managed on the hierarchical system, each part being associated with a task to be executed by the processor (1),
- there is memorised, in a dead memory (2), on the one hand the executable code of each of the different last parts in the hierarchy, and on the other hand, the composition (AMX, AMR-AMB-AMV-AMR-AMB-AMV, AMY, AMPR-AMCH-...-AMRI) of each of the other parts,
- there is memorised, in a reprogrammable memory (3), the memorisation addresses (AMY+1, AMX+1) of the dead memory (2), whereof the contents are to be modified in response to a modification of the program, as well as the corresponding modifications (MOTSUP, MOTINS, ALMB), and,
- the memorised modified program is restored by reading successively the contents of the memorisation addresses of the dead memory (2) and by searching in the reprogrammable memory (3), for each memorisation address, for a possible modification of its contents in order to take account thereof.

2. Method according to Claim 1, in which:
- the non-altered program is decomposed into a succession of first parts, each of these first parts into a succession of second parts, each of these second parts into a succession of third parts and so on until successions of last parts are obtained, and, there is memorised, in the dead memory (2):
- the executable code of each of the different last parts at a memorisation address (AMV, AMB, AMR) allocated to this last part,
- for each of the different next to last parts, on the one hand the list (AMR-AMB-AMV-AMR-AMB-AMV) of the memorisation addresses allocated to the last parts of the succession into which this next to the last part has been decomposed, and on the other hand, the initial memorisation address (AMX) of this last, at a memorisation address (AMRI) allocated to this next to last part,
- and so on as far as, for each of the different first parts, on the one hand the list (AMR-AMB-AMV-AMR-AMB-AMV) of the memorisation addresses allocated to the second parts of the succession into which this first part has been decomposed, and on the other hand the initial memorisation address (AMX) of this list, at a memorisation address (AMRI) allocated to this first part, and,
- the list (AMPR-AMCH-...-AMRI) of the memorisation addresses allocated to the first parts of the succession to which the program has been decomposed.

3. Method according to one of Claims 1 or 2, in which the alterations are memorised in the reprogrammable memory (3) in the order of the increasing addresses of the dead memory (2), and, before any reading of the contents of a memorisation address of the dead memory (2), in order to search if the contents of this address have been altered, the reprogrammable memory (3) is scanned until one finds either this memorisation address, or an address to be altered of a higher order.

4. Method according to one of Claims 1 to 3, in which, in response to an alteration of the program involving the execution of a task which has not been memorised in the dead memory (2), there is memorised in the reprogrammable memory (3) either the executable code of this new task, or its composition if it can be decomposed into parts already memorised in the dead memory (2).
